# EUROPÄISCHE PATENTSCHRIFT

(11) **EP 1 802 541 B1**
(45) Veröffentlichungstag und Bekanntmachung des Hinweises auf die Patenterteilung: **30.06.2010**
(21) Anmeldenummer: 05794803.6
(22) Anmeldetag: 15.10.2005
(51) Int. Cl.: B65G 39/12

(54) **GURTTRÄGER FÜR SCHLAUCHFÖRDERER**
BELT SUPPORT FOR PIPE CONVEYOR
PORTE-COURROIE POUR TRANSPORTEURS TUBULAIRES

(30) Priorität: 22.10.2004 DE 102004051533
(43) Veröffentlichungstag der Anmeldung: 04.07.2007
(73) Patentinhaber: FLSmidth KOCH GmbH, 66787 Wadgassen (DE)
(72) Erfinder: LAUB, Georg, 66649 Oberthal (DE)
(74) Vertreter: Bernhardt, Reinold
(86) Internationale Anmeldenummer: PCT/EP2005/011116
(87) Internationale Veröffentlichungsnummer: WO 2006/045463

(56) Entgegenhaltungen:
- US-A- 5 028 149
- US-A1- 2001 040 086
- PATENT ABSTRACTS OF JAPAN Bd. 006, Nr. 256 (M-179), 15. Dezember 1982 (1982-12-15) -& JP 57 151509 A (DAIKI KOGYO KK), 18. September 1982 (1982-09-18)

## Beschreibung

Die Erfindung betrifft einen Gurtträger für Schlauchförderer (Pipe conveyor) gemäß dem Oberbegriff des Anspruchs u.a. mit Tragrollen, die über den Umfang des schlauchförmigen Fördergurts verteilt und auf Achsbolzen gelagert sind, und mit einem den Fördergurt umgebenden Rollenhalter.

Zum Tragen und Führen des schlauchförmigen Fördergurts ist eine Reihenanordnung aus einer Vielzahl solcher Gurtträger erforderlich. Der Rollenhalter durch Benutzung bekannter Gurtträger weist eine Platte mit einer zentralen Öffnung als Durchgang für den Fördergurt auf. Um den Öffnungsrand verteilt sind an der Platte über U-förmige Halteelemente die Tragrollen angebracht, deren Achsbolzen mit den U-Schenkeln der Halteelemente verbunden ist.

Aus JP 57151509 A ist ein Gurtträger für einen vertikal fördernden Schlauchförderer bekannt, bei dem die Achsbolzen der Tragrollen an ihren Enden miteinander durch Verbindungsteile zu einem Ring verbunden und die Verbindungsteile ihrerseits mit einem ringförmigen äußeren Rahmen verbunden sind. Die Achsbolzen bilden zusammen mit dem Rahmen den Rollenhalter. In Förderrichtung gesehen liegen die Enden der Tragrollen zueinander im Abstand und die Rollen in einer einzigen Ebene.

Der Erfindung liegt die Aufgabe zugrunde, einen neuen Gurtträger für Schlauchförderer zu schaffen, der bei geringem Materialeinsatz für den Rollenhalter eine verbesserte Schlauchführung ermöglicht.

Diese Aufgabe wird gelöst durch einen Gurtträger mit den eingangs erwähnten Merkmalen, bei dem die Achsbolzen unter Verstärkung eines den Rollenhalter bildenden Rahmens durch zu den Achsbolzen senkrechte Verbindungsbolzen miteinander und mit dem Rahmen verbunden sind oder die Achsbolzen zusammen mit die Enden der Achsbolzen verbindenden, sich in ihrer Länge senkrecht zu den Achsbolzen erstreckenden Verbindungsteilen allein den Rollenhalter bilden, wobei die Rollen abwechselnd in Förderrichtung des Fördergurts versetzt angeordnet sind.

In dem Gurtträger nach der Erfindung übernehmen die Achsbolzen eine zusätzliche oder alleinige Tragfunktion. Bei geschlossenem Stützring für den Fördergurt kann am übrigen Rollenhalter Material eingespart werden.

Vorzugsweise bilden die verbundenen Achsbolzen, in Förderrichtung gesehen, ein Vieleck, vorzugsweise Sechseck, wobei die Länge der Vieleckseiten im wesentlichen gleich der Länge der Achsbolzen ist.

Zweckmäßig sind die miteinander verbundenen Achsbolzen abwechselnd auf der in Förderrichtung vorderen und hinteren Seite des Rahmens angeordnet. Vorteilhaft ergeben sich so zueinander in Förderrichtung versetzte Stützstellen am Fördergurt.

Vorzugsweise sind die Verbindungsbolzen als Schraubenbolzen ausgebildet und durch mit den Achsbolzen verbundene Hülsen geführt sind. Durch die Schraubenbolzen kann zwischen jeweils zwei Hülsen eine Schraubverbindung hergestellt sein.

In der bevorzugten Ausführungsform ist der Schraubenbolzen durch eine Öffnung in dem Rahmen hindurchgeführt und der Rahmen ist zwischen den beiden durch den Schraubenbolzen verschraubten Hülsen eingeklemmt. Somit ist eine kraftschlüssige Verbindung sowohl zwischen den Achsbolzen und dem Rahmen als auch zwischen den Achsbolzen untereinander hergestellt, so dass die Achsbolzen zusätzliche Tragfunktionen übernehmen. Entsprechend schwach kann der Rahmen ausgebildet sein.

Zweckmäßig ist die Hülse an einer stirnseitig mit dem Achsbolzen verbundenen Platte gebildet, wobei die Hülse vorzugsweise in der Art eines Scharnierteils durch Abbiegung des Plattenrandes hergestellt ist. Die Platte bildet eine Seitenführung für die Rollen. Zur Befestigung der Platte am Achsbolzen kann ein Langloch vorgesehen sein, welches erforderliche Feinjustierungen der Lage des Achsbolzens ermöglicht.

Die Erfindung wird nachfolgend anhand eines Ausführungsbeispiels und der beiliegenden, sich auf dieses Ausführungsbeispiel beziehenden Zeichnungen näher erläutert. Es zeigen:

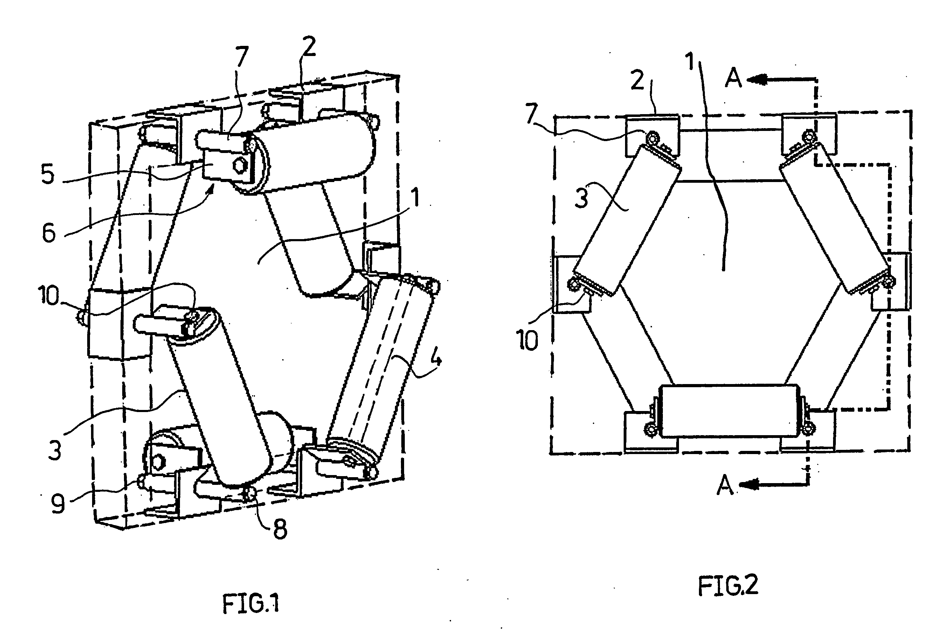

- Fig. 1: eine Teilansicht eines Gurtträgers für einen Fördergurt eines Schlauch- förderers in perspektivischer Darstellung,
- Fig. 2: eine Vorderansicht des Trägers von Fig. 1,

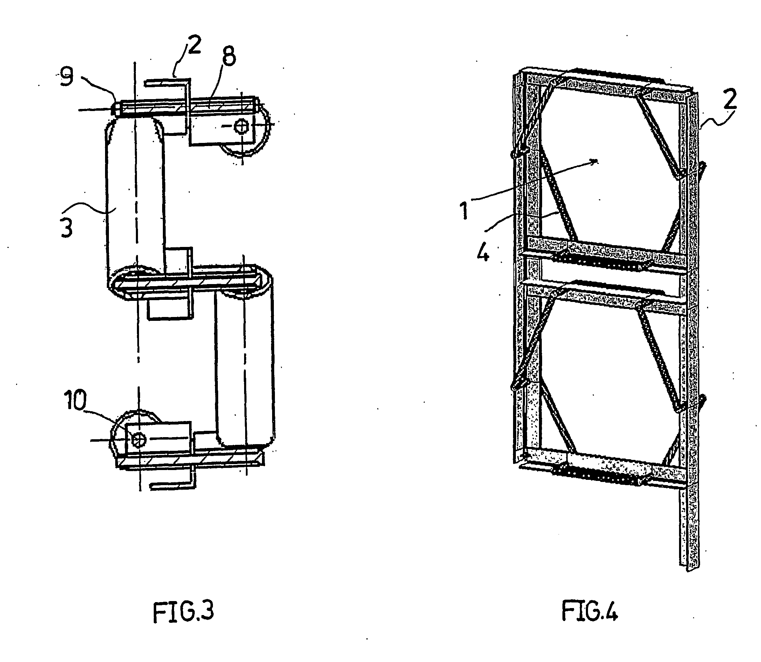

- Fig. 3: eine Seitenansicht des Trägers von Fig. 1 gemäß Schnittlinie A-A in Fig. 2,
- Fig. 4: eine die Anordnung der Achsbolzen der Tragrollen des Trägers von Fig. 1 verdeutlichende Darstellung,
- Fig. 5: eine Teilansicht eines Gurtträgers gemäß einem weiteren Ausführungsbei- spiel für die vorliegende Erfindung, und
- Fig. 6 und 7: für den Gurtträger von Fig. 5 verwendete Verbindungsteile in ver- schiedenen Ansichten.

Ein Gurtträger mit einer zentralen Öffnung 1 für einen schlauchförmigen Fördergurt (nicht gezeigt) weist einen zum Teil durch Strichlinien dargestellten rechteckigen Rahmen 2 aus einem Winkelprofil auf. Verbunden mit dem Rahmen 2 sind insgesamt sechs Tragrollen 3, die in Umfangsrichtung abwechselnd auf der in Förderrichtung vorderen und hinteren Seite des Rahmens 2 angeordnet sind.

Die Tragrollen 3 weisen jeweils einen Achsbolzen 4 auf, welcher an seinen beiden Stirnseiten mit einer Platte 5 eines Verbindungsteils 6 verschraubt ist.

An jedem Verbindungsteil 6 ist durch Abbiegung des Plattenrandes eine Hülse 7 gebildet. Die Achsbolzen 4 der sechs Tragrollen 3 sind untereinander jeweils durch einen Schraubenbolzen 8 verbunden, der durch zwei Hülsen 7 und eine im Rahmen 2 vorgesehene Öffnung hindurchgeführt ist. Durch den Schraubenbolzen 8 und eine Mutter 9 sind die Hülsen miteinander verschraubt, wobei der Rahmen 2 zwischen den Hülsen eingeklemmt ist.

Somit ist sowohl zwischen den beiden Hülsen als auch zwischen den Hülsen und dem Rahmen eine kraftschlüssige Verbindung hergestellt, so dass die auf die Rollen einwirkenden Lasten sowohl über den Rahmen 2 als auch über die Achsbolzen 4 abgetragen werden. Der Rahmen 2 kann daher unter Einsparung von Material verhältnismäßig schwach ausgebildet sein.

Die Platten 5 der Verbindungsteile 6 weisen zur Verschraubung mit den Achsbolzen 4 jeweils ein Langloch auf, um die erforderliche Lage der Achsbolzen 4 genau einstellen zu können.

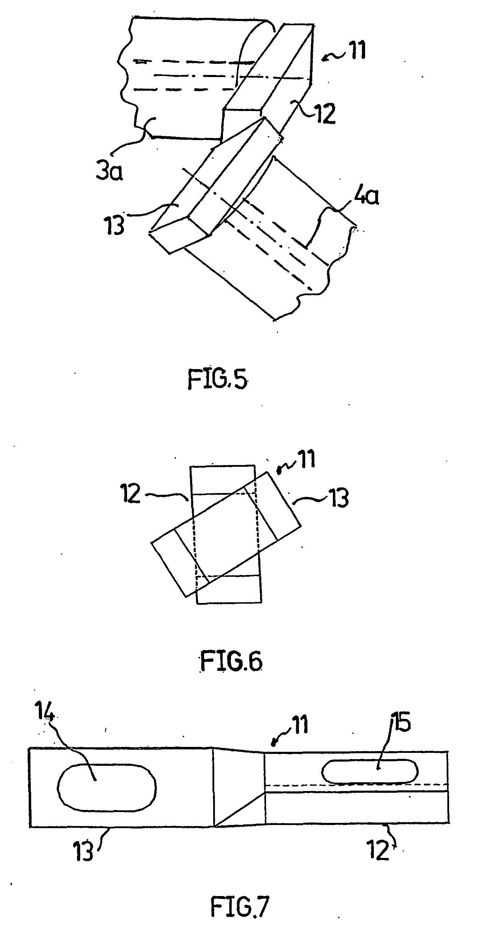

Es wird nun auf Fig. 5 Bezug genommen, wo ausschnittsweise ein Gurtträger mit Tragrollen 3a gezeigt ist, deren Rollenhalter ohne zusätzlichen Rahmen ausschließlich aus die Tragrollen 3a aufnehmenden Achsbolzen 4a und die Achsbolzen 4a verbindenden Teilen 11 besteht.

In dem betreffenden Ausführungsbeispiel erstrecken sich die Verbindungsteile 11 in ihrer Längsausdehnung senkrecht zu den Achsbolzen und sind einstückig aus gegeneinander verdrehten, länglichen Blöcken 12 und 13 gebildet. Jeder der Blöcke 12 und 13 ist mit einem Achsbolzen 4a verschraubt.

Wie aus Fig. 7 hervorgeht, ist in jedem der Blöcke 12 und 13 ein Langloch 14 bzw. 15 für die Verschraubung mit dem betreffenden Achsbolzen vorgesehen.

## Patentansprüche

1. Gurtträger für Schlauchförderer mit Tragrollen (3), die über den Umfang des schlauchförmigen Fördergurts verteilt und auf Achsbolzen (4) gelagert sind, und mit einem den Fördergurt umgebenden Rollenhalter, **dadurch gekennzeichnet, dass** die Achsbolzen (4) unter Verstärkung eines den Rollenhalter bildenden Rahmens (2) durch zu den Achsbolzen (4) senkrechte Verbindungsbolzen (8) miteinander und mit dem Rahmen (2) verbunden sind oder dass die Achsbolzen (4a) zusammen mit die Enden der Achsbolzen (4a) verbindenden, sich in ihrer Länge senkrecht zu den Achsbolzen (4a) ersteckenden Verbindungsteilen (11) allein den Rollenhalter bilden, wobei die Tragrollen (3) abwechselnd in Förderrichtung des Fördergurts versetzt angeordnet sind.

2. Gurtträger nach Anspruch 1,
**dadurch gekennzeichnet,**
**dass** die verbundenen Achsbolzen (4), in Förderrichtung gesehen, ein Vieleck bilden, wobei die Länge der Vieleckseiten im wesentlichen gleich der Länge der Achsbolzen (4) ist.

3. Gurtträger nach Anspruch 1 oder 2,
**dadurch gekennzeichnet,**
**dass** die miteinander verbundenen Achsbolzen (4) abwechselnd auf der in Förderrichtung vorderen und hinteren Seite des Rahmens (2) angeordnet sind.

4. Gurtträger nach einem der Ansprüche 1 bis 3,
**dadurch gekennzeichnet,**
**dass** der Verbindungsbolzen (8) durch mit den Achsbolzen (4) verbundene Hülsen (7) hindurchgeführt ist.

5. Gurtträger nach Anspruch 4,
**dadurch gekennzeichnet,**
**dass** der Verbindungsbolzen ein Schraubenbolzen (8) zur Herstellung einer Schraubverbindung (8,9) zwischen den Hülsen (7) ist.

6. Gurtträger nach Anspruch 5,
**dadurch gekennzeichnet,**
**dass** der Schraubenbolzen (8) durch eine Öffnung in dem Rahmen (2) hindurchgeführt und der Rahmen (2) durch die Schraubverbindung (8,9) zwischen den Hülsen (7) eingeklemmt ist.

7. Gurtträger nach einem der Ansprüche 4 bis 6,
**dadurch gekennzeichnet,**
**dass** die Hülse (7) an einer stirnseitig mit dem Achsbolzen (4) verbundenen Platte (5) gebildet ist.

8. Gurtträger nach Anspruch 7,
**dadurch gekennzeichnet,**
**dass** die Hülse (7) durch Abbiegen des Randes der Platte (5) gebildet ist.

9. Gurtträger nach Anspruch 1,
**dadurch gekennzeichnet,**
**dass** die Verbindungsteile (11), vorzugsweise einstückig, aus zueinander verdrehten Blöcken (12,13) hergestellt sind.

10. Gurtträger nach Anspruch 9,
**dadurch gekennzeichnet,**
**dass** die Verbindungsteile (11), vorzugsweise über Langlöcher (14,15), mit den Achsbolzen (40) verschraubt sind.

## Claims

1. Belt carrier for pipe conveyors, having carrying rollers (3) which are distributed over the circumference of the pipe-like conveying belt and are mounted on axial bolts (4), and having a roller holder which encloses the conveying belt, **characterized in that** the axial bolts (4) are connected to one another and to a roller-holder-forming frame (2) by connecting bolts (8) that are perpendicular to the axial bolts (4), this connection having the effect of reinforcing the frame (2), or **in that** the axial bolts (4a) form the roller holder only together with connecting parts (11) which connect the ends of the axial bolts (4a) and extend, lengthwise, perpendicularly to the axial bolts (4a), the carrying rollers (3) being offset in alternating fashion in the conveying direction of the conveying belt.

2. Belt carrier according to Claim 1,
**characterized**
**in that,** as seen in the conveying direction, the connected axial bolts (4) form a polygon the length of the polygon sides being essentially equal to the length of the axial bolts (4).

3. Belt carrier according to Claim 1 or 2,
**characterized**
**in that,** in the conveying direction, the interconnected axial bolts (4) are arranged in alternating fashion on the front and rear sides of the frame (2).

4. Belt carrier according to one of Claims 1 to 3,
**characterized**
**in that** the connecting bolt (8) is led through sleeves (7) which are connected to the axial bolts (4).

5. Belt carrier according to Claim 4,
**characterized**
**in that** the connecting bolt is a screw bolt (8) for producing a screw connection (8, 9) between the sleeves (7).

6. Belt carrier according to Claim 5,
**characterized**
**in that** the screw bolt (8) is led through an opening in the frame (2), and the frame (2) is clamped in between the sleeves (7) by the screw connection (8, 9).

7. Belt carrier according to one of Claims 4 to 6,
**characterized**
**in that** the sleeve (7) is formed on a plate (5) which is connected to the axial bolt (4) on the front side.

8. Belt carrier according to Claim 7,
**characterized**
**in that** the sleeve (7) is formed by virtue of the periphery of the plate (5) being bent.

9. Belt carrier according to Claim 1,
**characterized**
**in that** the connecting parts (11) are produced, preferably in one piece, from blocks (12, 13) which are rotated in relation to one another.

10. Belt carrier according to Claim 9,
**characterized**
**in that** the connecting parts (11) are screw-connected to the axial bolts (4a), preferably via slots (14, 15).

## Revendications

1. Porte-courroie pour dispositif de transport tubulaire avec des galets support (3), qui sont répartis sur la périphérie de la courroie de transport tubulaire et disposés sur les boulons axiaux (4), et avec un porte-rouleaux entourant la courroie de transport, **caractérisé**
- **en ce que** les boulons axiaux (4) sont assemblés, en renforçant un cadre (2) formant le porte-rouleaux, les uns aux autres et au cadre (2) par des boulons d'assemblage (8) perpendiculaires aux boulons axiaux (4) ou
- **en ce que** les boulons axiaux (4a) forment, uniquement ensemble avec des pièces d'assemblage (11) reliant les extrémités des boulons axiaux (4a), s'étendant dans leur longueur perpendiculairement aux boulons axiaux (4a), le porte-rouleaux, les galets support (3) étant disposés de manière alternativement décalée dans le sens de transport de la courroie de transport.

2. Porte-courroie selon la revendication 1, **caractérisé en ce que** les boulons axiaux (4) assemblés forment, observés dans le sens de transport, un polygone, la longueur des côtés du polygone étant essentiellement identique à la longueur des boulons axiaux (4).

3. Porte-courroie selon la revendication 1 ou 2, **caractérisé en ce que** les boulons axiaux (4) assemblés les uns aux autres sont disposés alternativement dans le sens du transport sur le côté avant et arrière du cadre (2).

4. Porte-courroie selon l'une quelconque des revendications 1 à 3, **caractérisé**
**en ce que** le boulon d'assemblage (8) passe au travers de manchons (7) assemblés aux boulons axiaux (4).

5. Porte-courroie selon la revendication 4, **caractérisé en ce que** le boulon d'assemblage est un boulon à visser (8) pour réaliser un assemblage vissé (8, 9) entre les manchons (7).

6. Porte-courroie selon la revendication 5, **caractérisé en ce que** le boulon à visser (8) passe au travers d'une ouverture dans le cadre (2) et le cadre (2) est coincé par l'assemblage vissé (8, 9) entre les manchons (7).

7. Porte-courroie selon l'une quelconque des revendications 4 à 6, **caractérisé**
**en ce que** le manchon (7) est formé sur une plaque (5) assemblée sur la face frontale au boulon axial (4).

8. Porte-courroie selon la revendication 7, **caractérisé en ce que** le manchon (7) est formé par pliage du bord de la plaque (5).

9. Porte-courroie selon la revendication 1, **caractérisé en ce que** les pièces d'assemblage (11) sont réalisées, de préférence en une seule pièce, en blocs (12, 13) tournés l'un par rapport à l'autre.

10. Porte-courroie selon la revendication 9, **caractérisé en ce que** les pièces d'assemblage (11) sont vissées, de préférence via des trous longitudinaux (14, 15) avec les boulons axiaux (4a).
